(19)

Europäisches
Patentamt
European
Patent Office
Office européen
des brevets

(11)  **EP 4 765 012 A1**

(12)  **EUROPEAN PATENT APPLICATION**

(43) Date of publication:
24.06.2026   Bulletin 2026/26

(21) Application number: 25224271.4

(22) Date of filing: 17.12.2025

(51) International Patent Classification (IPC):
*G06T 5/50* (2006.01)

(52) Cooperative Patent Classification (CPC):
**G06T 5/50;** G06T 2207/10144; G06T 2207/20208;
G06T 2207/20221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   18.12.2024   CN 202411875244

(71) Applicant: **GUANGDONG OPPO MOBILE
TELECOMMUNICATIONS
CORP., LTD.
Dongguan, Guangdong 523860 (CN)**

(72) Inventor: **TANG, Cheng
Dongguan, Guangdon 523860 (CN)**

(74) Representative: **Penza, Giancarlo
Bugnion S.p.A.
Viale Lancetti, 17
20158 Milano (IT)**

(54)  **IMAGE PROCESSING METHOD, ELECTRONIC DEVICE, AND STORAGE MEDIUM**

(57)    This present disclosure relates to an image processing method and apparatus, an electronic device, a computer-readable storage medium, and a computer program product. The method includes: acquiring first spectral image data and second spectral image data, brightness values of the first spectral image data being different from brightness values of the second spectral image data; performing image fusion on a region of the first spectral image data and a corresponding region in the second spectral image data, thereby obtaining regional fusion data; and performing statistics on the regional fusion data, thereby obtaining target spectral data. With this method, the information of various types of spectral channels with different brightness can be complemented, which helps to improve the information accuracy of the spectral channels and enables the target spectral data to have a high dynamic range.

EP 4 765 012 A1

**Description**

TECHNICAL FIELD

The present disclosure relates to the technical field of image processing, and particularly to an image processing method, an electronic device, and a computer-readable storage medium.

BACKGROUND

With the continuous optimization of photography functions of electronic devices, there is a need to shoot in specific shooting scenes to meet different shooting needs.

However, electronic devices use image sensors for image acquisition. Since the brightness that the image sensor can collect has a corresponding threshold, it is difficult to fully collect the brightness of the shooting scene, which may lead to information loss.

SUMMARY

Embodiments of the present disclosure provide an image processing method, an electronic device, and a computer-readable storage medium, by which the information accuracy of spectral channels are improved and the dynamic range of target spectral data is enhanced. The invention is set out in the appended set of claims.

In the above-mentioned image processing method, electronic device, and computer-readable storage medium, first spectral image data and second spectral image data are acquired. In one aspect, since each of the first spectral image data and the second spectral image data contains multiple types of spectral channels, the dimensions of these two types of spectral image data are relatively rich, enabling the acquisition of more accurate information. In another aspect, since the overall brightness of the first spectral image data is different from the overall brightness of the second spectral image data, even if a certain type of spectral channel under one overall brightness reaches the maximum or minimum value and can no longer capture information, the information of this type of spectral channel can still be provided through the other overall brightness. Therefore, fusion may be performed in this case, which can make the information of various types of spectral channels with different brightness complemented. On this basis, image fusion is performed on corresponding regions of the two types of spectral image data, to obtain regional fusion data. This allows each region to be processed separately, to provide region-level data. The richer data levels help improve the information accuracy of spectral channels. Finally, statistics is performed on the regional fusion data, to convert the region-level data into global-level target spectral data, thereby improving the dynamic range.

BRIEF DESCRIPTION OF THE DRAWINGS

In order to more clearly illustrate technical solutions in the embodiments of the present disclosure, drawings required for the description of the embodiments of the present disclosure will be briefly introduced below. Apparently, the drawings described below illustrate only some embodiments of the present disclosure. For those of ordinary skill in the art, other drawings can be obtained based on these drawings without paying any creative work.

FIG. 1 illustrates an application environment in which an image processing method according to embodiments of the present disclosure is applied.
FIG. 2 is a schematic flowchart of an image processing method according to an embodiment of the present disclosure.
FIG. 3 schematically illustrates a spectral channel array of a repeating unit according to an embodiment of the present disclosure.
FIG. 4 schematically illustrates partitioned spectral channels according to an embodiment of the present disclosure.
FIG. 5 schematically illustrates an array of each group of channels according to an embodiment of the present disclosure.
FIG. 6 schematically illustrates spectral channel fusion in each region according to an embodiment of the present disclosure.
FIG. 7 is a schematic specific flowchart of an image processing method according to an embodiment of the present disclosure.
FIG. 8 is a structural block diagram of an image processing apparatus according to an embodiment of the present disclosure.
FIG. 9 schematically illustrates an internal structure of an electronic device according to an embodiment of the present disclosure.

DETAILED DESCRIPTION OF PREFERRED EMBODIMENTS

In order to make the purposes, technical solutions and advantages of the present disclosure more clearly, the present disclosure will be further described in detail below in conjunction with the drawings and embodiments. It is understandable that the specific embodiments described herein are only used to explain the present disclosure, rather than limiting the present disclosure.

In the field of partitioned multispectral modules, there are image sensors with multiple regions and multiple types of spectral channels. The hardware of such image sensors is implemented using a pixel array and resin dyes. The main purpose of this image sensor in mobile phones is to assist the camera in imaging for white balance (AWB) and color reproduction. In a case where the partitioned multispectral module plays an auxiliary role for the RGB camera, the hardware investment in the partitioned multispectral module is much lower than that in the RGB camera, and the performance of the image sensor (sensor) of the partitioned multispectral module is also far inferior to that of the image sensor of the RGB camera. The performance difference leads to insufficient dynamic range of partitioned multi-spectrum, making it unable to perform corresponding shooting operations well in high-dynamic scenes. Therefore, the present disclosure is needed.

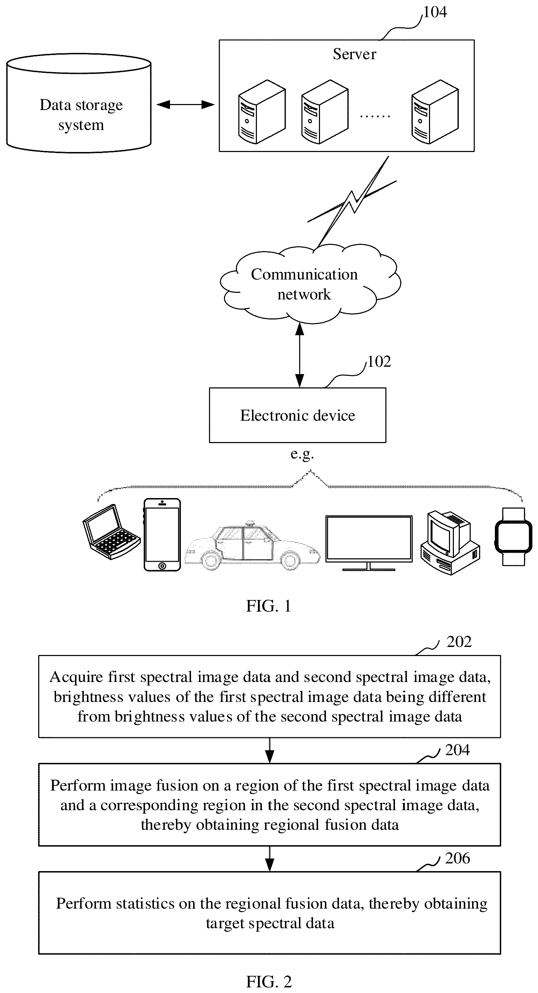

The image processing method provided in the embodiments of the present disclosure may be applied to the application environment illustrated in FIG. 1. In such application environment, an electronic device(s) 102 communicates with a server(s) 104 through a network. A data storage system may store data that needs to be processed by the server(s) 104. The data storage system may be integrated on the server 104, or deployed on the cloud or other network servers. The electronic device(s) 102 may be, but not limited to, various personal computers, laptops, smartphones, tablets, Internet of Things (IoT) devices, and portable wearable devices. The IoT devices may be smart speakers, smart TVs, smart air conditioners, smart in-vehicle devices, etc. The portable wearable devices may be smart watches, smart bracelets, head-mounted devices, etc. The server 104 may be implemented by an independent server or a server cluster composed of multiple servers.

In some exemplary embodiments, as illustrated in FIG. 2, an image processing method is provided. It is illustrated by taking a case where the method is applied to/implemented by the electronic device 102 shown in FIG. 1 as an example, and it may also be applied to the server 104. The method includes operations 202-206 as follows.

At 202, first spectral image data and second spectral image data are acquired, brightness values of the first spectral image data being different from brightness values of the second spectral image data.

The first spectral image data and the second spectral image data each are data collected by multiple types of spectral channels. The multiple types of spectral channels may belong to collection channels configured for the image sensor. The image sensor is a photosensitive component used for image collection. The image sensor may collect information of the spectrum in different wavebands, so that analysis is performed for each waveband. From a functional perspective, the image sensor includes a primary image sensor and an auxiliary image sensor, and the primary image sensor and the auxiliary image sensor each are configured to collect information of the spectrum in different ranges. When the primary image sensor includes an RGB camera module, the auxiliary image sensor is a partitioned multi-channel module with multiple types of spectral channels. Correspondingly, when the primary image sensor is a partitioned multi-channel module with multiple types of spectral channels, the auxiliary image sensor includes an RGB camera module.

A spectral channel is a channel used to collect information for a preset waveband. Each type of spectral channel can provide information of one waveband. Thus, there is little impact on the brightness between individual spectral channels, and a corresponding channel value of each spectral channel may be determined from different perspectives. The brightness of each spectral channel is channel-level information, and the brightness of each spectral channel represents the information collected by the spectral channel.

The spectral channels may be distinguished from two perspectives: frequency band and processing way. Each type of spectral channel is configured for signal collection of the spectrum in a same frequency band. Each type of spectral channel may be configured with multiple spectral channels. For example, in a spectrum detection unit, for the type of spectral channel configured to collect red light, multiple spectral channels at different positions may be configured. Each spectral pixel channel has an independent signal collection and processing way, and the signal collection and processing ways of the individual spectral channels may be the same or different.

The first spectral image data and the second spectral image data may be obtained through image collection using an image sensor with multiple types of spectral channels. Correspondingly, each of the first spectral image data and the second spectral image data is image data with multiple types of spectral channels, and the brightness of the second spectral image data at the image level is different from the brightness of the first spectral image data at the image level. Since the overall brightness of these two types of spectral image data at the image level is different, even if a certain type of spectral channel under one overall brightness reaches the maximum or minimum value and can no longer capture information, the information of this type of spectral channel can still be provided through the other overall brightness. Therefore, fusion may be performed in this case, which can make the information of various types of spectral channels with different brightness complemented.

From the perspective of the image and its collection process, each of the first spectral image data and the second spectral image data includes at least one frame of image data, and the collection process of each of the first spectral image data and the second spectral image data is executed at least once. Therefore, more types of brightness and information can be provided for fusion.

From the perspective of relative concepts, among at least two frames of spectral image data, any two frames of image data with different brightness are mutually the first spectral image data and the second spectral image data; in this case, the first spectral image data and the second spectral image data are defined in a relative concept. The at least two frames of spectral image data may include three frames of spectral image data. The three frames of spectral image data are underexposed image data (EV-), normally exposed image data (EV0), and overexposed image data (EV+) in ascending order of brightness. Alternatively, the three frames of spectral image data are normally exposed image data (EV0), underexposed image data (EV-), and severely underexposed image data (EV--) in descending order of brightness. Taking the underexposed image data, normally exposed image data, and overexposed image data as an example, any two frames of image data among the underexposed image data, normally exposed image data, and overexposed image data are the first spectral image data and the second spectral image data, and intermediate regional fusion data, i.e., the fusion result of the any two frames of image data, is obtained; and the fusion result of the any two frames of image data and the remaining one frame of image data may be the first spectral image data and the second spectral image data, and fusion is performed again therefor, thereby obtaining the regional fusion data used in operation 206.

Exemplarily, the multiple types of spectral channels include, but are not limited to, a red channel for collecting red light, a green channel for collecting green light, a blue channel for collecting blue light, a cyan channel for collecting cyan light, a magenta channel for collecting magenta light, a yellow channel (Y) for collecting yellow light, and a purple channel for collecting purple light. The frequency band that the red channel can collect may be 620-700 nanometers (nm). The frequency band that the green channel can collect may be 500-565 nanometers (nm). The frequency band that the blue channel can collect may be 440-485 nanometers (nm). The frequency band that the cyan channel can collect may be 485-500 nanometers (nm). The frequency band that the magenta channel can collect may be the superposed part of 625-740 nanometers (nm) and 440-485 nanometers (nm). The frequency band that the yellow channel can collect may be 565-570 nanometers (nm). The frequency band that the purple channel can collect may be 380-450 nanometers (nm).

In the implementation of image collection, the brightness values of multiple types of spectral channels may be obtained by filtering with at least six types of band-pass filters respectively. The at least six types of band-pass filters include three types of filters corresponding to the RGB color space and three types of filters corresponding to the CMY color space. The three types of filters corresponding to the RGB color space are configured to make red light (R), green light (G), and blue light (B) pass therethrough respectively, and the three types of filters corresponding to the CMY color space are configured to make cyan light (C), magenta light (M), and yellow light (Y) pass therethrough respectively. Exemplarily, the multiple types of spectral channels may also include an infrared filter (IR filter) for retaining infrared rays and a clear filter for retaining various spectrum. The multiple types of spectral channels may also be 8 types of channels, including three types of filters corresponding to the RGB color space, three types of filters corresponding to the CMY color space, an infrared filter, and a clear filter, which may be represented as RGBCMY + clear + IR. The multiple types of spectral channels may also involve other color spaces or relationships among different color spaces, thus forming multiple types of spectral channels of 9 or more wavebands.

In some embodiments, the acquiring the first spectral image data and the second spectral image data includes: after the filters arranged at different positions of the image sensor filter a first optical signal with light of the first optical signal that do not belong to the respective spectral channels filtered out, converting, through the photoelectric sensors at individual position, the filtered first optical signal into electrical signals at the individual positions, thereby obtaining the first spectral image data; and after the filters arranged at different positions of the image sensor filter a second optical signal with light of the second optical signal that do not belong to the respective spectral channels filtered out, converting, through the photoelectric sensors at the individual positions, the filtered second optical signal into electrical signals at the individual positions, thereby obtaining the second spectral image data. In this way, the optical signals are filtered by the filters, and the data processed by the circuit and the processor is relatively less, which improves the efficiency.

In some embodiments, the acquiring the first spectral image data and the second spectral image data includes: obtaining the first spectral image data under exposure with a first exposure time, and obtaining the second spectral image data under exposure with a second exposure time, the first exposure time being different from the second exposure time. In this way, the brightness of the spectral image data is controlled through different exposure times, to ensure the processing efficiency.

At 204, image fusion is performed on a region of the first spectral image data and a corresponding region in the second spectral image data, thereby obtaining regional fusion data.

The regional fusion data includes a set of spectral channel values provided by the spectral channels in the region. The spectral channels in each region are arranged in such a manner that the spectral channels are in a physical region of the image sensor. For example, the abscissa of each spectral channel in each region is within a preset abscissa range of the region, and the ordinate of each spectral channel in each region is within a preset ordinate range of the region.

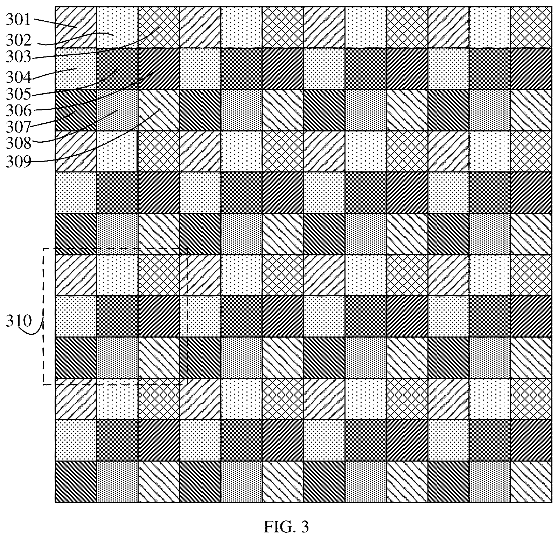

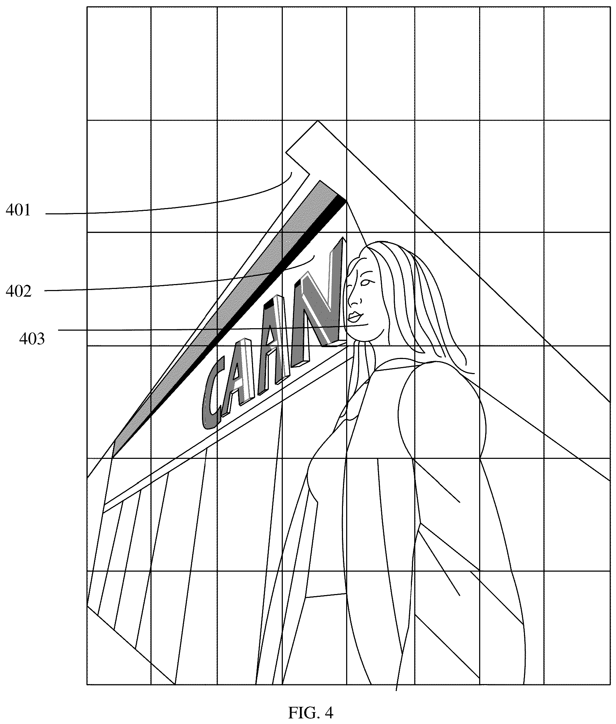

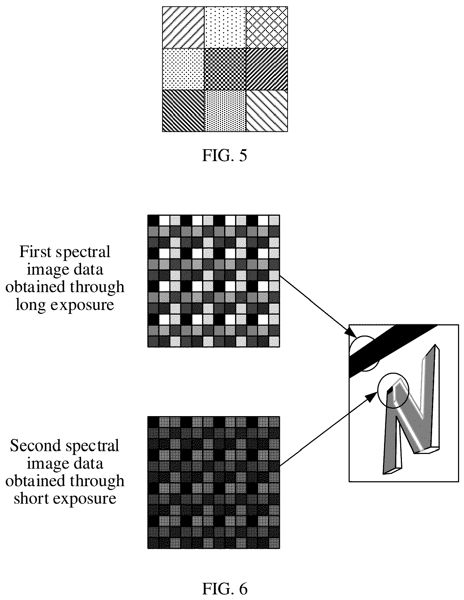

The spectral channels in each region may also be obtained through division according to a preset number of regions, such that the spectral channels in each region include a group of spectral channels, and each group of spectral channels includes multiple types of spectral channels. For example, for an image sensor having spectral channels for 2 million pixels, the resolution of the image collected by the image sensor is 1600*1200 pixels, the preset number of regions is 8*6, and a group of spectral channels has 3*3 spectral channels, that is, each group of spectral channels includes 9 spectral channels of different types; in this case, 1600*1200 divided by the 8*6 regions gives 200*200 spectral channels in each region; then, 200*200 divided by 3*3 gives that each region includes 66*66 = 4356 groups of spectral channels. The spectral channels of a repeating unit of the image sensor are as illustrated in FIG. 3, which includes multiple groups of spectral channels 310, and each group of spectral channels 310 includes 9 spectral channels. Each spectral channel is of a different type, thus forming spectral channel 301, spectral channel 302, spectral channel 303, spectral channel 304, spectral channel 305, spectral channel 306, spectral channel 307, spectral channel 308, and spectral channel 309. The spectral channels of the 8*6 regions are as illustrated in FIG. 4, and the regions include, but are not limited to, region 401, region 402, region 403, etc. Each group of channels thereof is as illustrated in FIG. 5. The fusion process for the regional fusion data is as illustrated in FIG. 6, where the first spectral image data with long exposure and the second spectral image data with short exposure are used to provide information at different positions.

The regional fusion data is data obtained by fusing each region in the first spectral image data and a corresponding region in the second spectral image data. In each region, there are still multiple types of spectral channels, and each type of spectral channel is fused separately. The number of types of spectral channels in the regional fusion data remains unchanged.

In some embodiments, the performing image fusion on a region of the first spectral image data and the corresponding region in the second spectral image data and thereby obtaining regional fusion data, includes: dividing, according to corresponding positions of spectral channels in the image sensor, each of the first spectral image data and the second spectral image data into M regions; and fusing the spectral channel value of each spectral channel in the i-th region of the first spectral image data and the spectral channel value of the spectral channel in the i-th region of the second spectral image data, thereby obtaining fused data of each spectral channel in the i-th region, where i is a positive integer less than or equal to M, and M is a positive integer.

At 206, statistics is performed on the regional fusion data, thereby obtaining target spectral data.

The target spectral data is overall spectral data defined based on each regional fusion data. In terms of the number of channels of the target spectral data, the number of spectral channels of the target spectral data is the sum of the number of spectral channels in the individual regions. In terms of the spectral channel values of the target spectral data, the formation of the target spectral data includes performing statistics on the spectral channel value of each spectral channel in the regional fusion data.

In the process of obtaining the target spectral data, the statistics may be performed in terms of the channel values of the spectral channels of the regional fusion data, or the ratio of the channel values of different types of spectral channels, such as the ratio of different types of spectral channels in the regional fusion data. Of course, the statistics may also be performed in terms of other data used to calculate the white balance result or color restoration data, which is not limited here.

In some embodiments, the obtaining target spectral data by performing statistics on the regional fusion data includes: performing statistics on a target parameter in the regional fusion data, and obtaining a statistical result of the target parameter; and generating the target spectral data, according to the statistical result and the position of the statistical result. The target parameter includes, but is not limited to, the channel values of the spectral channels and the ratio of the channel values of different types of spectral channels.

In the above image processing method, the first spectral image data and the second spectral image data are acquired. In one aspect, since each of the first spectral image data and the second spectral image data contain multiple types of spectral channels, the dimensions of these two types of spectral image data are relatively rich, enabling the acquisition of more accurate information. In another aspect, since the overall brightness of these two types of spectral image data is different, even if a certain spectral channel under one overall brightness reaches the maximum or minimum value and can no longer capture information, the information of that spectral channel can still be provided through the other overall brightness. Therefore, fusion may be performed in this case, which can make the information of various types of spectral channels with different brightness complemented. On this basis, image fusion is performed on corresponding regions of the two types of spectral image data, to obtain regional fusion data. This allows each region to be processed separately, to provide region-level data. The richer data levels help improve the accuracy. Finally, statistics is performed on the regional fusion data, to convert the region-level data into global-level target spectral data, thereby improving the dynamic range.

In some embodiments, the method may further include: acquiring initial spectral image data; and when the brightness of the initial spectral image data meets an adjustment condition, executing the operation of acquiring the first spectral image data and the second spectral image data.

The initial spectral image data is at least one frame of image data with multiple types of spectral channels. In terms of brightness, the brightness of the initial spectral image data is less than the brightness of the first spectral image data and greater than the brightness of the second spectral image data, so that the brightness of the initial spectral image data is moderate.

In terms of collection, the initial spectral image data is collected in the same way as the first spectral image data, but the exposure time of the initial spectral image data is different from the exposure time of the first spectral image data, so that the brightness of the initial spectral image data is different from the brightness of the first spectral image data.

The adjustment condition is a collection condition for the spectral image data with different brightness. For the case where the brightness of the initial spectral image data meets the adjustment condition, it may be determined based on the global brightness of the initial spectral image data or based on the local brightness of the initial spectral image data. In addition, for the case where the brightness of the initial spectral image data meets the adjustment condition, it may also be determined based on the number and distribution results of spectral channels. Furthermore, when fusing the first spectral image data and the second spectral image data, the initial spectral image data may also be fused.

In the embodiments, the initial spectral image data is collected first, and then a conditional determination is made based on the brightness of the initial spectral image data. This can reduce the frequency of image collection for spectral image data and the frequency of image fusion, thereby improving the processing efficiency.

In some embodiments, the determining that the brightness of the initial spectral image data meets the adjustment condition, includes: counting, in the initial spectral image data, the number of spectral channels whose brightness values meet a brightness condition, thereby obtaining the number of spectral channels meeting the brightness condition; and when the number of spectral channels meeting the brightness condition meets a preset quantity condition, determining that the brightness of the initial spectral image data meets the adjustment condition.

The number of spectral channels is a statistical result of the brightness values of the spectral channels. Since the brightness of the spectral channels is at the local level, and the number of spectral channels is at the global level of the initial spectral image data, the conversion from the local level to the global level is realized through the statistical process. The number of spectral channels may also be unrelated with the types of spectral channels, so as to improve the statistical efficiency. When the brightness conditions of different spectral channels are different and the number of spectral channels is unrelated with the types of spectral channels, this helps to improve the statistical efficiency and accuracy.

The brightness condition is set for the brightness value of the spectral channel. The brightness condition is used to pick out the spectral channels whose brightness values are in an abnormal brightness range, thus the local-level brightness information may be analyzed more accurately. The brightness value of the spectral channel is a kind of channel value, and the channel value may also include attributes such as the coordinate position of the channel, distribution of the channel, and type of the channel.

The preset quantity condition includes a global quantity condition. Therefore, when the number of spectral channels meeting the brightness condition exceeds a corresponding threshold, there is a global-level brightness abnormality. In this case, it is determined that the brightness of the initial spectral image data meets the adjustment condition. The preset quantity condition may also include a condition related to the positions of the corresponding spectral channels, so as to further define different local levels based on the distribution information of the corresponding positions, thereby more accurately determining whether the brightness of the initial spectral image data meets the adjustment condition.

In some embodiments, the preset quantity condition may be a preset quantity ratio. Correspondingly, the determining that the brightness of the initial spectral image data meets the adjustment condition, when the number of spectral channels meeting the brightness condition meets the preset quantity condition, includes: when the ratio between the number of spectral channels meeting the brightness condition and the total number of spectral channels of the initial spectral image data is greater than the preset quantity ratio, determining that the brightness of the initial spectral image data meets the adjustment condition.

In some embodiments, the counting, in the initial spectral image data, the number of spectral channels whose brightness values meet the brightness condition and thereby obtaining the number of spectral channels meeting the brightness condition, includes: determining, from the initial spectral image data, spectral channels whose brightness values exceed a critical value; and summing up the numbers of spectral channels whose brightness values exceed the critical value, thereby obtaining the number of spectral channels meeting the brightness condition. In this way, the statistical efficiency is improved through the summation.

In some embodiments, the counting, in the initial spectral image data, the number of spectral channels whose brightness values meet the brightness condition and thereby obtaining the number of spectral channels meeting the brightness condition, includes: determining, from the initial spectral image data, brightness histograms of each group of spectral channels; and summing up the numbers of spectral channels whose brightness histogram exceeds a critical value, thereby obtaining the number of spectral channels meeting the brightness condition. In this way, a histogram level is added between the spectral channel level and the global level, which improves the statistical accuracy.

In the embodiments, the number of spectral channels whose brightness values meet the brightness condition is counted in the initial spectral image data, to pick out the spectral channels that can more accurately determine the information related to the adjustment condition, realizing local-level determination. By picking out the number of spectral channels meeting the brightness condition, the saturation degree of the spectral channels at the global level can be more accurately reflected. Therefore, when the number of spectral channels meeting the brightness condition meets the preset quantity condition, it more accurately determines, at the global level, that the brightness of the initial spectral image data meets the adjustment condition.

In some embodiments, the spectral channels whose brightness values meet the brightness condition include at least one of a first spectral channel and a second spectral channel. The brightness value of the first spectral channel is less than a first critical value, the brightness value of the second spectral channel is equal to a second critical value, and the second critical value is greater than the first critical value.

The first spectral channel is a spectral channel that provides too little information, i.e., an underexposed spectral channel. Since the brightness of the first spectral channel is less than the first critical value, the first spectral channel provides too little information. Therefore, fusion with different spectral image data is required, to provide information in different regions through long and short exposures. Exemplarily, the first spectral channel is a spectral channel with a brightness value less than 5, i.e., a low-quality pixel.

The second spectral channel is a spectral channel whose provided information under the corresponding brightness reaches the saturation value, i.e., an overexposed spectral channel. Since the channel value can no longer provide more information after reaching the maximum value, fusion of different spectral image data is required, to provide information in different regions through long and short exposures. Exemplarily, the second spectral channel is a spectral channel with a brightness value equal to the saturation value, i.e., a saturated pixel.

The first critical value is a brightness value used to determine the brightness quality. A spectral channel whose brightness value is less than the first critical value is the first spectral channel, and a spectral channel whose brightness value is greater than the first critical value can provide moderate information and is not the first spectral channel.

The second critical value is a brightness value used to determine the brightness saturation degree. A spectral channel whose brightness value is equal to the second critical value is the second spectral channel, and a spectral channel whose brightness value is less than the second critical value can provide moderate information and is not the second spectral channel.

The above-mentioned statement "the spectral channels whose brightness values meet the brightness condition include at least one of the first spectral channel and the second spectral channel" means that the spectral channels whose brightness values meet the brightness condition may include the first spectral channels, the second spectral channels, or both the first spectral channel(s) and the second spectral channel(s). When both the first spectral channel(s) and the second spectral channel(s) are included, the number of spectral channels of the first spectral channels and the number of spectral channels of the second spectral channels may be counted separately, and then it is determined whether the numbers of spectral channels of these two types meets the preset quantity condition. If the number of spectral channels of any one type meets the preset quantity condition, the brightness of the initial spectral image data meets the adjustment condition.

In the embodiments, the spectral channel whose brightness value meets the brightness condition is a spectral channel whose brightness value is outside the normal brightness range. Therefore, either the first spectral channel indicating underexposure or the second spectral channel indicating overexposure may be used as the spectral channel meeting the brightness condition. Thus, the situation where the shooting channel(s) meet the adjustment condition can be adaptively adjusted for different scenes, so as to more accurately and flexibly control the fusion process.

In some embodiments, the performing image fusion on the region of the first spectral image data and the corresponding region in the second spectral image data and thereby obtaining regional fusion data, includes: performing fusion processing based on the brightness value of a j-th spectral channel in an i-th region of the first spectral image data and a corresponding brightness fusion weight, and based on the brightness value of the j-th spectral channel in the i-th region of the second spectral image data and a corresponding brightness fusion weight, thereby obtaining fusion data of the j-th spectral channel in the i-th region, where i is a positive integer and j is a positive integer.

The brightness fusion weight is a weight value determined based on the brightness value. The brightness fusion weight is used to adjust the brightness value, thereby realizing data fusion of the two types of spectral image data. In a case where the brightness fusion weight is determined based on the brightness value of each spectral channel, the fusion data of different spectral channels can be adaptively adjusted.

In some embodiments, the performing fusion processing based on the brightness value of the j-th spectral channel in the i-th region of the first spectral image data and the corresponding brightness fusion weight and based on the brightness value of the j-th spectral channel in the i-th region of the second spectral image data and the corresponding brightness fusion weight and thereby obtaining the fusion data of the j-th spectral channel in the i-th region, includes: mapping the brightness value of the j-th spectral channel in the i-th region of the first spectral image data to a first brightness fusion weight, and adjusting the brightness value of the j-th spectral channel in the i-th region of the first spectral image data according to the first brightness fusion weight, thereby obtaining a first to-be-summed brightness value of the j-th spectral channel in the i-th region; mapping the brightness value of the j-th spectral channel in the i-th region of the second spectral image data to a second brightness fusion weight, and adjusting the brightness value of the j-th spectral channel in the i-th region of the second spectral image data according to the second brightness fusion weight, thereby obtaining a second to-be-summed brightness value of the j-th spectral channel in the i-th region; and summing the first to-be-summed brightness value and the second to-be-summed brightness value, thereby obtaining the fusion data of the j-th spectral channel in the i-th region.

In the embodiments, the brightness value of each spectral channel has a corresponding brightness fusion weight. Therefore, the fusion data of each spectral channel is obtained by means of the local-level brightness fusion weights, thereby ensuring the accuracy of the fusion data.

In some embodiments, the above brightness values include a first brightness value and a second brightness value in different brightness intervals. The first brightness value is less than the second brightness value. The first brightness value is positively correlated with the brightness fusion weight, and the second brightness value is negatively correlated with the brightness fusion weight.

The brightness intervals indicate the distribution of brightness values of the individual spectral channels. The brightness values in different brightness intervals have different variation rules. There are at least two brightness intervals, and the maximum value of the brightness interval where the first brightness value is located is less than the minimum value of the brightness interval where the second brightness value is located, so that the first brightness value is less than the second brightness value. In the brightness interval where the first brightness value is located, there may also be multiple sub-intervals to further refine the brightness fusion weight.

The first brightness value shows a case where the brightness value is too low, indicating a high degree of noise influence. Therefore, the first brightness value is positively correlated with the brightness fusion weight. The lower the first brightness value, the greater the noise of the spectral channel to which the first brightness value belongs, leading to lower confidence. Therefore, the first brightness value is positively correlated with the corresponding brightness fusion weight, so that the brightness fusion weight is positively correlated with the confidence. Correspondingly, the higher the first brightness value, the smaller the noise of the spectral channel to which the first brightness value belongs, leading to higher confidence. Therefore, the first brightness value is positively correlated with the corresponding brightness fusion weight, so that the brightness fusion weight is positively correlated with the confidence.

The second brightness value shows a case where the brightness value is too high, indicating that the degree to which the second brightness value is close to the saturation value has a great influence. Therefore, the second brightness value is negatively correlated with the brightness fusion weight. The higher the second brightness value, the closer to the saturation value the spectral channel to which the second brightness value belongs, so the ratio between the second brightness value and the brightness values of other spectral channels is more likely to not conform to a preset ratio relationship, which also affects the confidence. Therefore, the second brightness value is negatively correlated with the corresponding brightness fusion weight, so that the brightness fusion weight is positively correlated with the confidence. The lower the second brightness value, the farther from the saturation value the spectral channel to which the second brightness value belongs, so the ratio between the second brightness value and the brightness values of other spectral channels is more likely to conform to the preset ratio relationship, which also affects the confidence. Therefore, the second brightness value is negatively correlated with the corresponding brightness fusion weight, so that the brightness fusion weight is positively correlated with the confidence.

The first brightness value and the second brightness value are set for each spectral channel, and the brightness value of each spectral channel may be one of the first brightness value and the second brightness value. When the first brightness value and the second brightness value belong to different intervals, the brightness fusion weights can be controlled more precisely, thereby ensuring the accuracy of the regional fusion data.

Since the first brightness value and the second brightness value are set for each spectral channel, each spectral channel in the first spectral image data can have either the first brightness value or the second brightness value, and each spectral channel in the second spectral image data may also have either the first brightness value or the second brightness value. In addition, since the first spectral image data and the second spectral image data have different overall brightness, the brightness values of the first spectral image data and the second spectral image data at a same pixel position are different.

In the embodiments, the brightness values in different intervals have different variation rules for the brightness fusion weight, so that the variation of the brightness value can be controlled more precisely, thereby ensuring the relatively high accuracy of the regional fusion data.

In some embodiments, when the first brightness value is less than a first threshold, the brightness fusion weight is a minimum preset value. When the first brightness value is greater than a second threshold and less than a third threshold, the brightness fusion weight is a maximum preset value. When the second brightness value is greater than a fourth threshold, the brightness fusion weight is the minimum preset value. The first threshold, the second threshold, the third threshold, and the fourth threshold are in ascending order, and the minimum preset value is less than the maximum preset value.

The first threshold is a brightness threshold used to indicate whether the degree of noise influence affects the normal use. When the first brightness value is less than the first threshold, it indicates that the noise is too large, and the corresponding brightness fusion weight is the minimum preset value. When the first brightness value is greater than the first threshold and less than the second threshold, it indicates that the noise is relatively small, and the first brightness value is positively correlated with the brightness fusion weight.

The second threshold is a smaller brightness threshold used to indicate whether the degree of noise influence is small enough and the degree to which the spectral channel is close to the saturation value is small enough. The third threshold is a larger brightness threshold used to indicate whether the degree of noise influence is small enough and the degree to which the spectral channel is close to the saturation value is small enough. When the first brightness value is between the second threshold and the third threshold, it indicates that the noise is small and the degree to which the spectral channel is close to the saturation value is the smallest, so the brightness fusion weight is the maximum preset value.

The fourth threshold is a threshold set for the second brightness value, which is used to indicate a critical case where the noise is relatively small and the spectral channel is not saturated. Since the second brightness value is negatively correlated with the brightness fusion weight, when the second brightness value is greater than the fourth threshold, the influence of the degree to which the second brightness value is close to the saturation value is too large, so the brightness fusion weight is set to the minimum preset value.

The first threshold, the second threshold, and the third threshold are all thresholds set for the first brightness value. The brightness values less than the third threshold are all first brightness values. The first threshold, the second threshold, and the third threshold are used for the variation rule adjustment of the first brightness value, so as to further improve the accuracy of the brightness fusion weight. Correspondingly, the interval where the first brightness value is located is refined into at least three cases: a case where the first brightness value of a certain spectral channel is less than the first threshold, in this case, the brightness fusion weight is the minimum preset value; a case where the first brightness value of the certain spectral channel is between the first threshold and the second threshold, in this case, the first brightness value is positively correlated with the brightness fusion weight, and the positive correlation may be linear or non-linear; and a case where the first brightness value of the certain spectral channel is between the second threshold and the third threshold, in this case, the brightness fusion weight is the maximum preset value.

The third threshold and the fourth threshold are thresholds set for the second brightness value. In addition to the case where the second brightness value is greater than the fourth threshold, the second brightness value may also be between the third threshold and the fourth threshold, and in this case, the second brightness value is negatively correlated with the brightness fusion weight, and the negative correlation may be linear or non-linear.

The minimum preset value is a minimum value of the brightness fusion weight, which indicates that the brightness value of the respective spectral channel has the smallest influence in the fusion. The minimum preset value may be but not limited to 0. The maximum preset value is a maximum value of the brightness fusion weight, which indicates that the brightness value of the respective spectral channel has the largest influence in the fusion. The maximum preset value may be but not limited to 100%.

Exemplarily, the first threshold is 5, the second threshold is 20, the third threshold is 900, and the fourth threshold is 950; the minimum preset value is 0, and the maximum preset value is 100%. Therefore, the brightness fusion weight corresponding to the first brightness value less than 5 is 0, the brightness fusion weight corresponding to the first brightness value between 20 and 900 is 100%, and the brightness fusion weight corresponding to the second brightness value greater than 950 is 0.

In the embodiments, since the first brightness value and the second brightness value are in different brightness intervals and have different variation rules, both of them have corresponding brightness fusion weights of the minimum preset value. In addition, when the first brightness value is between the second threshold and the third threshold, the noise is relatively low and does not affect the ratio of brightness between different spectral channels, so the confidence is directly set to the maximum preset value to ensure the accuracy.

In some embodiments, the processing fusion based on the brightness value of the j-th spectral channel in the i-th region of the first spectral image data and the corresponding brightness fusion weight, and based on the brightness value of the j-th spectral channel in the i-th region of the second spectral image data and the corresponding brightness fusion weight, and thereby obtaining the fusion data of the j-th spectral channel in the i-th region, includes:

performing fusion processing based on the brightness value of the j-th spectral channel in the i-th region of the first spectral image data, the corresponding brightness fusion weight and a corresponding gain coefficient fusion weight, and based on the brightness value of the j-th spectral channel in the i-th region of the second spectral image data, the corresponding brightness fusion weight and a corresponding gain coefficient fusion weight, thereby obtaining the fusion data of the j-th spectral channel in the i-th region.

Each of the gain coefficient fusion weights is negatively correlated with the gain coefficient of the respective brightness value.

The gain coefficient fusion weight is a weight value determined based on the gain coefficient. The gain coefficient fusion weight is used to adjust the brightness value, thereby realizing data fusion of the two types of spectral image data.

The gain coefficient fusion weight is determined based on the gain coefficient of each spectral channel, so that the fusion data of different spectral channels can be adaptively adjusted. The gain coefficient (Gain) represents the degree of gain of the brightness value inside the image sensor (sensor). For a same brightness value, there are differences in confidence under different gain coefficients. The higher the gain coefficient, the lower the confidence of the same brightness value.

In some embodiments, the performing fusion processing based on the brightness value of the j-th spectral channel in the i-th region of the first spectral image data, the corresponding brightness fusion weight and the corresponding gain coefficient fusion weight, and based on the brightness value of the j-th spectral channel in the i-th region of the second spectral image data, the corresponding brightness fusion weight and the corresponding gain coefficient fusion weight, thereby obtaining the fusion data of the j-th spectral channel in the i-th region, includes: mapping the brightness value of the j-th spectral channel in the i-th region of the first spectral image data to a first brightness fusion weight, and determining a first gain coefficient fusion weight according to a gain coefficient of the first spectral image data; adjusting the brightness value of the j-th spectral channel in the i-th region of the first spectral image data, according to the first brightness fusion weight and the first gain coefficient fusion weight, thereby obtaining a first weighted brightness value of the j-th spectral channel in the i-th region; mapping the brightness value of the j-th spectral channel in the i-th region of the second spectral image data to a second brightness fusion weight, and determining a second gain coefficient fusion weight according to a gain coefficient of the second spectral image data; adjusting the brightness value of the j-th spectral channel in the i-th region of the second spectral image data, according to the second brightness fusion weight and the second gain coefficient fusion weight, thereby obtaining a second weighted brightness value of the j-th spectral channel in the i-th region; and summing the first weighted brightness value and the second weighted brightness value, thereby obtaining the fusion data of the j-th spectral channel in the i-th region.

Exemplarily, considering the brightness value, the corresponding brightness fusion weight, and the gain coefficient fusion weight, for Region 1 (Raw_T1_Block1) having M groups of spectral channels (which is equivalent to providing M groups of pixel values), the expression for fusing the j-th spectral channel in the i-th region is as follows:

$$\text{Channel } j = \sum_{j}^{M} \text{Pixel\_j} * \text{W\_DNj} * \text{W\_ratioj}$$

Channel j represents the fusion result for the j-th spectral channel, Pixel_j represents the brightness value of the j-th spectral channel, W_DNj represents the brightness fusion weight corresponding to the j-th spectral channel, and W_ratioj represents the gain coefficient fusion weight corresponding to the j-th spectral channel.

In the embodiments, each spectral channel has a corresponding brightness fusion weight and gain coefficient fusion weight for its brightness value. Therefore, the influence of the image sensor on the confidence of the brightness value is incorporated by means of the fusion weights, and the fusion data of each spectral channel is provided through the more detailed local-level brightness fusion weight and gain coefficient fusion weight, thereby ensuring higher accuracy of the fusion data.

In some embodiments, the performing statistics on the regional fusion data and thereby obtaining target spectral data, includes: performing statistics, according to spectral channels, on each regional fusion data, thereby obtaining channel values of individual types of spectral channels; and converting the channel values of the individual types of spectral channels into spectral data, thereby obtaining the target spectral data.

The channel value of the spectral channel includes at least brightness value, and may also include a processed result of the brightness value. Since the spectral channel has attributes such as coordinate position of the channel, distribution of the channel, and type of the channel, the distribution of the corresponding channel values may be determined when performing statistics on the channel values of the spectral channels.

In a case where the channel values of the individual types of spectral channels are obtained, the channel values at the global level of the image may be represented by the channel values of the individual types of spectral channels. Therefore, the spectral data may be provided according to the position information of corresponding spectral channels.

In some embodiments, the performing statistics, according to spectral channels, on each regional fusion data and thereby obtaining the channel values of individual types of spectral channels, includes: converting positions of the spectral channels in each regional fusion data into positions at the image level, thereby obtaining the channel values of the individual types of spectral channels.

In some embodiments, the performing statistics, according to spectral channels, on each regional fusion data and thereby obtaining the channel values of individual types of spectral channels, includes: summing the brightness values of each type of spectral channel in the regional fusion data, thereby obtaining channel values of the individual types of spectral channels.

In some embodiments, the converting the channel values of the individual types of spectral channels into spectral data and thereby obtaining the target spectral data, includes: determining, according to positions of the channel values of the individual types of spectral channels, corresponding positions of the channel values of the individual types of spectral channels in spectral image data; and associating the channel values of the individual types of spectral channels with the corresponding positions, thereby obtaining the target spectral data. In this way, the positions of the regional fusion data are converted into positions in the target spectral data, and the conversion of spectral data from the local level to the global level is realized through the adjustment of position relationships.

In the embodiments, the statistics is performed on each regional fusion data according to spectral channels, so that the channel values at the regional level are converted into channel values at the global level. The channel values of the individual types of spectral channels are converted into spectral data, so that the channel values at the global level are restored to the target spectral data.

In some embodiments, the method may further include: determining target environment data based on the target spectral data; and performing color temperature adjustment on the target spectral data according to the target environment data.

The target environment data represents a shooting scene of the image sensor. Since different environments correspond to different color temperatures, the color temperature suitable for the target environment data may be determined according to the target environment data, so as to perform color temperature adjustment on the target spectral data. The target environment data may include, but is not limited to, the identifier of the shooting scene and parameters corresponding to the identifier.

In some embodiments, the determining target environment data based on the target spectral data, includes: determining a shooting environment corresponding to the target spectral data, according to a comparison result between the target spectral data and a preset environment threshold; and determining the target environment data according to the shooting environment.

In some embodiments, the performing color temperature adjustment on the target spectral data according to the target environment data, includes: determining a corrected color value corresponding to the target environment data; determining a difference between the target spectral data and the corrected color value; performing color temperature adjustment on the target spectral data according to the difference, until the difference reaches the minimum value. The difference may be a color matrix. Correspondingly, the methods for performing color temperature adjustment on the target spectral data include, but are not limited to, the gradient descent method, lookup table, neural network, or other optimization methods.

In some embodiments, the performing color temperature adjustment on the target spectral data according to the target environment data, includes: determining, from a lookup table corresponding to the target environment data, a color temperature adjustment coefficient to which the target spectral data is mapped; and performing color temperature adjustment on the target spectral data, according to the color temperature adjustment coefficient.

In the embodiments, the target environment data is determined based on the target spectral data, so that the shooting environment can be more accurately determined by means of the dimensions of multiple types of spectral channels. Color temperature adjustment is performed on the target spectral data according to the target environment data, so that the color temperature of the target spectral data is more consistent with the actual shooting scene. In addition, the color temperature is applied according to partitioned target spectral data, and there is no need to use the first spectral image data and the second spectral image data for adaptive adjustment. The amount of data to be adjusted is relatively small, which is beneficial to the optimization of computing power and power consumption. In addition, multi-channel color temperature can more accurately determine the partitioned color temperature of the image, which helps to restore colors and solve the problem of light mixing in image data.

In some embodiments, the determining target environment data based on the target spectral data, includes: determining the ratio of spectral channel values in the target spectral data; when it is determined, according to the ratio of spectral channel values, that there is one shooting scene, using the environment data of the one shooting scene as the target environment data; and when it is determined, according to the ratio of spectral channel values, that there are at least two shooting scenes, determining the target environment data according to image detection data of the at least two shooting scenes.

The ratio of spectral channel values includes the difference between the channel values of different spectral channels. On the basis of the dimension of spectral channels, a dimension used for determining the shooting scene is added through the ratio of spectral channel values, so that the environment data can be more accurately determined. The ratio of spectral channel values may include, but is not limited to, the ratio of the channel value of each spectral channel, or the ratio of the channel values of some different spectral channels. For example, in a case where the target spectral data has N spectral channels, the ratios of the brightness values of the N spectral channels may be used as the ratio of spectral channel values; alternatively, the ratios of the brightness values of Z spectral channels may be used as the ratio of spectral channel values, where Z is a positive integer less than N, and N is a positive integer.

The shooting scene includes potential scene elements existing when the image sensor performs image collection. The shooting scene includes, but is not limited to, object scene and weather scene. The object scene may include location scenes such as studios, offices, and parks, or may also include physical scenes such as portraits and green plants. The weather scene may include natural light scene, artificial light scene and the like, and the natural light scene may be scenes of for example daytime, dusk, or sunset. Due to the limited number of spectral channels, it is difficult to accurately reflect the characteristics of natural light, so there may be a case where it is determined, according to the ratio of spectral channel values, that there are at least two shooting scenes.

The image detection data is detection data in a different dimension from the ratio of spectral channel values. The image detection data may be, but not limited to, the result of text recognition or image recognition, and the image detection data may also be sound data or text input.

In some embodiments, the using the environment data of one shooting scene as the target environment data when it is determined, according to the ratio of spectral channel values, that there is the one shooting scene, includes: when the confidence between the ratio of spectral channel values and environment characteristics of the shooting scene reaches a preset value, using the environment data representing the shooting scene as the target environment data. In this way, the confidence is determined through the environment data to expand the selectable range.

In some embodiments, the using the environment data of one shooting scene as the target environment data when it is determined, according to the ratio of spectral channel values, that there is the one shooting scene, includes: when the similarity between the ratio of spectral channel values and the environment characteristics of the shooting scene reaches a preset value, using the environment data representing the shooting scene as the target environment data. In this way, the similarity is determined based on the environment data, and the shooting scene is directly screened according to the similarity, thereby improving the processing efficiency.

In some embodiments, the determining, according to the ratio of spectral channel values, that there are at least two shooting scenes, includes: determining a feature difference between the ratio of spectral channel values and a ratio of preset spectral channel values contained in each of multiple shooting scenes; determining, from the multiple shooting scenes, at least two shooting scenes whose corresponding feature differences are less than a preset value. In this way, the shooting scenes are represented in the dimension of the ratio of spectral channel values, and the feature difference is determined based on the ratio of spectral channel values, to accurately determine the existence of at least two shooting scenes.

In some embodiments, the determining, according to the ratio of spectral channel values, that there are at least two shooting scenes, includes: determining the feature difference between the ratio of spectral channel values and the ratio of preset spectral channel values contained in each of multiple shooting scenes; performing difference calculation based on the feature differences corresponding to at least two shooting scenes, to determine a shooting scene difference; and determining at least two shooting scenes whose corresponding shooting scene difference is less than a preset value. In this way, on the basis of determining the feature difference, feature difference calculation is further performed to more accurately determine the shooting scene difference between at least two shooting scenes, and the existence of at least two shooting scenes is more accurately determined through the shooting scene differences.

Taking shooting scenes of sunset or green plants in 9 spectral channels as an example, since the 9-channel ratio of sunset in spectral response is close the 9-channel ratio of green plants in spectral response, corresponding image detection data is used for adaptive detection, and the confidences of the two shooting scenes (sunset and green plants) are adjusted, and the target environment data is determined based on the adjustment result.

In the embodiments, the ratio of spectral channel values can further increase the dimension of spectral channels, enabling accurate determination of the target shooting scene. On this basis, for the problem of insufficient dimension of spectral channels, the target environment data is more accurately determined according to the image detection data of the at least two shooting scenes.

In some embodiments, the method may further include: determining a photographing parameter according to the target spectral data.

The photographing parameter is a parameter used for image shooting. The photographing parameter includes, but is not limited to, parameters for image signal processing, which may be related to the white balance, color restoration, etc. of the image obtained through photographing. In a case where the target spectral data is obtained based on the first spectral image data and the second spectral image data collected by the auxiliary sensor, the target spectral data is used for the photographing parameter(s) of the main sensor.

For the process of determining the photographing parameter(s), the parameter(s) used for shooting an image may be adjusted according to the target spectral data, so that an image after the adjustment is displayed.

Thus, since the dynamic range of the target spectral data is improved, the determination of photographing parameter(s) can make the photographing parameter(s) more suitable for the actual scene, thereby making the image obtained by photographing more consistent with the real scene.

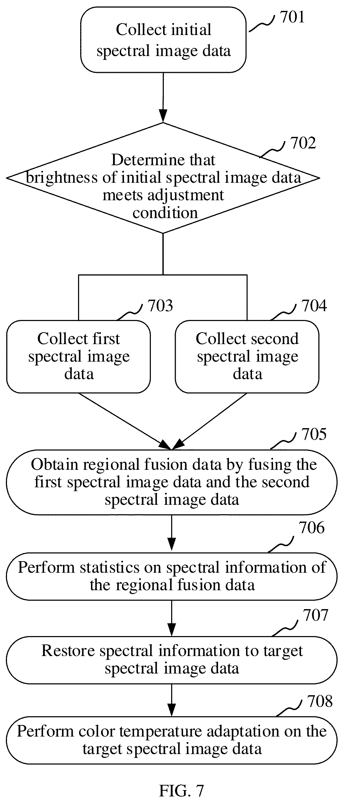

In an exemplary embodiment, as illustrated in FIG. 7, double exposure is taken as an example to describe the partitioned multispectral fusion processing method. The fusion processing method includes operations as follows. At 701, initial spectral image data is collected. At 702, it is determined that the brightness of the initial spectral image data meets the adjustment condition. At 703, first spectral image data is collected. At 704, second spectral image data is collected. At 705, the first spectral image data and the second spectral image data are fused, thereby obtaining regional fusion data. At 706, statistics is performed on the spectral information of the regional fusion data. At 707, the spectral information is restored to target spectral image data. At 708, color temperature adaptation is performed on the target spectral image data.

The above-mentioned collecting initial spectral image data, and when determining that the brightness of the initial spectral image data meets the adjustment condition, collecting the first spectral image data and collecting the second spectral image data, includes:

acquiring initial spectral image data;

counting, in the initial spectral image data, the number of spectral channels whose brightness values meet a brightness condition, thereby obtaining the number of spectral channels meeting the brightness condition; and when the number of spectral channels meeting the brightness condition meets a preset quantity condition, determining that the brightness of the initial spectral image data meets the adjustment condition; where the spectral channels whose brightness values meet the brightness condition include at least one of a first spectral channel and a second spectral channel, the brightness value of the first spectral channel is less than a first critical value, the brightness value of the second spectral channel is equal to a second critical value, and the second critical value is greater than the first critical value; and

when the brightness of the initial spectral image data meets the adjustment condition, executing the operations of acquiring the first spectral image data and the second spectral image data.

The above-mentioned fusing the first spectral image data and the second spectral image data and thereby obtaining regional fusion data includes:

performing fusion processing based on the brightness value of the j-th spectral channel in the i-th region of the first spectral image data, a corresponding brightness fusion weight and a corresponding gain coefficient fusion weight, and based on the brightness value of the j-th spectral channel in the i-th region of the second spectral image data, a corresponding brightness fusion weight and a corresponding gain coefficient fusion weight, thereby obtaining fusion data of the j-th spectral channel in the i-th region.

The brightness values include a first brightness value and a second brightness value in different brightness intervals. The first brightness value is less than the second brightness value. The first brightness value is positively correlated with the brightness fusion weight. The second brightness value is negatively correlated with the brightness fusion weight. When the first brightness value is less than a first threshold, the brightness fusion weight is a minimum preset value. When the first brightness value is greater than a second threshold and less than a third threshold, the brightness fusion weight is a maximum preset value. When the second brightness value is greater than a fourth threshold, the brightness fusion weight is the minimum preset value. The first threshold, the second threshold, the third threshold, and the fourth threshold are in ascending order, and the minimum preset value is less than the maximum preset value.

Each of the gain coefficient fusion weights is negatively correlated with the gain coefficient of the respective brightness value.

The above-mentioned performing statistics on the spectral information of the regional fusion data and restoring the spectral information to target spectral image data, includes: performing statistics, according to spectral channels, on each regional fusion data, thereby obtaining channel values of individual types of spectral channels; and converting the channel values of the individual types of spectral channels into spectral data, thereby obtaining the target spectral data.

The above-mentioned performing color temperature adaptation on the target spectral image data includes:

determining the ratio of spectral channel values in the target spectral data;

when it is determined, according to the ratio of spectral channel values, that there is one shooting scene, using environment data of the one shooting scene as target environment data;

when it is determined, according to the ratio of spectral channel values, that there are at least two shooting scenes, determining the target environment data according to image detection data of the at least two shooting scenes; and

performing color temperature adjustment on the target spectral data, according to the target environment data.

As can be seen, the image fusion function is introduced into the partitioned multispectral working mode, and the target spectral image data may be obtained through multiple exposures. This improves the dynamic range of the partitioned multi-spectrum, so that it can better adapt to the working of the RGB camera. In addition, the multiple exposures adopted by the partitioned multi-spectrum may be multiple exposures performed with different times such as T1, T2, and T3.

It is understandable that, although the operations in the flowcharts involved in the above embodiments are illustrated in sequence according to the arrows, these operations are not necessarily executed in sequence instructed by the arrows. Unless explicitly stated herein, these operations are not limited to being executed in a strict order, and these operations may be executed in other orders. Moreover, at least part of the operations in the flowcharts involved in the above embodiments may include multiple operations or multiple stages. These operations or stages are not necessarily executed at the same time, but may be executed at different times. These operations or stages are not necessarily executed in sequence, but may be executed in turn or alternately with other operations or at least part of the operations or stages in other operations.

Based on the same inventive concept, the embodiments of the present disclosure further provide an image processing apparatus for implementing the above-mentioned image processing methods. The solution for solving the problem as provided by the apparatus is similar to the solution of the above methods, and for the specific definitions on one or more image processing apparatus embodiments provided below, reference may be made to the definitions on the image processing methods above, which will not be repeated here.

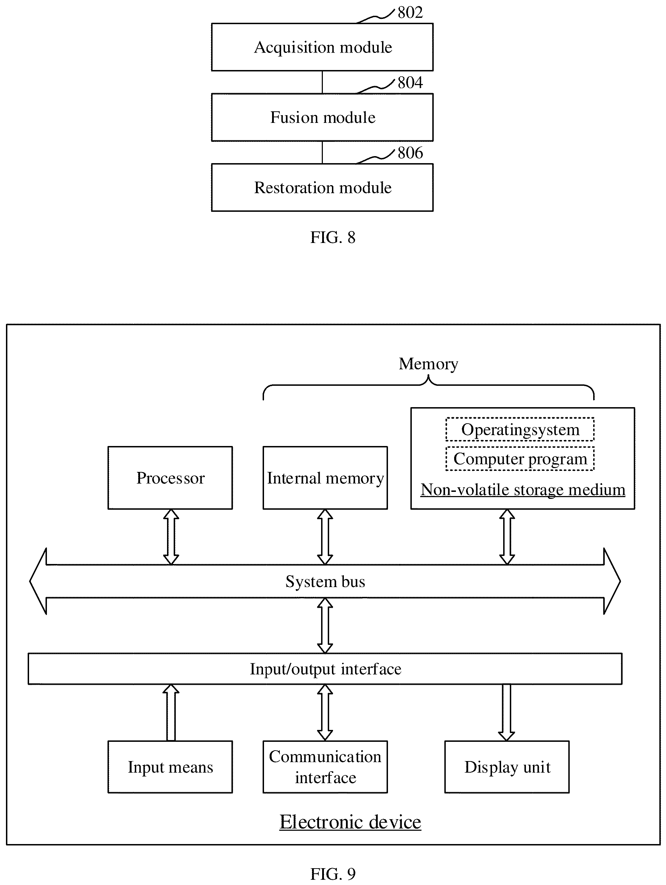

In an exemplary embodiment, as illustrated in FIG. 8, an image processing apparatus is provided, which includes an acquisition module 802, a fusion module 804, and a restoration module 806.

The acquisition module 802 is configured to acquire first spectral image data and second spectral image data, brightness values of the first spectral image data being different from brightness values of the second spectral image data.

The fusion module 804 is configured to perform image fusion on a region of the first spectral image data and a corresponding region in the second spectral image data to obtain regional fusion data.

The restoration module 806 is configured to perform statistics on the regional fusion data to obtain target spectral data.

In an embodiment, the fusion module 804 is configured to: perform fusion processing based on the brightness value of a j-th spectral channel in an i-th region of the first spectral image data and a corresponding brightness fusion weight, and based on the brightness value of the j-th spectral channel in the i-th region of the second spectral image data and a corresponding brightness fusion weight, thereby obtaining fusion data of the j-th spectral channel in the i-th region, where i is a positive integer and j is a positive integer.

In an embodiment, the brightness values include a first brightness value and a second brightness value in different brightness intervals. The first brightness value is less than the second brightness value. The first brightness value is positively correlated with the brightness fusion weight. The second brightness value is negatively correlated with the brightness fusion weight.

In an embodiment, when the first brightness value is less than a first threshold, the brightness fusion weight is a minimum preset value. When the first brightness value is greater than a second threshold and less than a third threshold, the brightness fusion weight is a maximum preset value. When the second brightness value is greater than a fourth threshold, the brightness fusion weight is the minimum preset value. The first threshold, the second threshold, the third threshold, and the fourth threshold are in ascending order, and the minimum preset value is less than the maximum preset value.

In an embodiment, the fusion module 804 is configured to: performing fusion processing based on the brightness value of the j-th spectral channel in the i-th region of the first spectral image data, the corresponding brightness fusion weight and a corresponding gain coefficient fusion weight, and based on the brightness value of the j-th spectral channel in the i-th region of the second spectral image data, the corresponding brightness fusion weight and a corresponding gain coefficient fusion weight, thereby obtaining the fusion data of the j-th spectral channel in the i-th region.

Each of the gain coefficient fusion weights is negatively correlated with the gain coefficient of the respective brightness value.

In an embodiment, the restoration module 806 is configured to: perform statistics, according to spectral channels, on each regional fusion data, thereby obtaining channel values of individual types of spectral channels; and convert the channel values of the individual types of spectral channels into spectral data, thereby obtaining the target spectral data.

In an embodiment, the acquisition module 802 is configured to: acquire initial spectral image data; and when the brightness of the initial spectral image data meets an adjustment condition, acquire the first spectral image data and the second spectral image data.

In an embodiment, the acquisition module 802 is configured to: count, in the initial spectral image data, the number of spectral channels whose brightness values meet a brightness condition, thereby obtaining the number of spectral channels meeting the brightness condition; and when the number of spectral channels meeting the brightness condition meets a preset quantity condition, determine that the brightness of the initial spectral image data meets the adjustment condition.

In an embodiment, the spectral channels whose brightness values meet the brightness condition include at least one of a first spectral channel and a second spectral channel. The brightness value of the first spectral channel is less than a first critical value, the brightness value of the second spectral channel is equal to a second critical value, and the second critical value is greater than the first critical value.

In an embodiment, the restoration module 806 is configured to: determine target environment data based on the target spectral data, and perform color temperature adjustment on the target spectral data, according to the target environment data.

In an embodiment, the restoration module 806 is configured to: determine a ratio of spectral channel values in the target spectral data; when it is determined, according to the ratio of spectral channel values, that there is one shooting scene, use the environment data of the one shooting scene as the target environment data; and when it is determined, according to the ratio of spectral channel values, that there are at least two shooting scenes, determine the target environment data according to image detection data of the at least two shooting scenes.

In an embodiment, the acquisition module 802 is configured to: obtain the first spectral image data under exposure with a first exposure time; and obtain the second spectral image data under exposure with a second exposure time, the first exposure time being different from the second exposure time.

In an embodiment, the apparatus further includes a parameter determination module configured to: determine a photographing parameter according to the target spectral data.

Each module in the above image processing apparatus may be fully or partially implemented by software, hardware, and a combination thereof. The above modules may be in the form of hardware and embedded in or independent of the processor in the electronic device, or may also be in the form of software and stored in the memory in the electronic device, so that it may be called by the processor to execute the operations corresponding to the above modules.

In an exemplary embodiment, an electronic device is provided. The electronic device may be a terminal, and its internal structure may be as illustrated in FIG. 9. The electronic device includes a processor, a memory, an input/output interface, a communication interface, a display unit, and an input means. The processor, the memory, and the input/output interface are connected through a system bus, and the communication interface, the display unit, and the input means are connected to the system bus through the input/output interface. The processor of the electronic device is configured to provide computing and control capabilities. The memory of the electronic device includes a non-volatile storage medium and an internal memory. The non-volatile storage medium stores an operating system and a computer program. The internal memory provides an environment for the operation of the operating system and the computer program in the non-volatile storage medium. The input/output interface of the electronic device is used to exchange information between the processor and external devices. The communication interface of the electronic device is used to communicate with external terminals in a wired or wireless manner. The wireless manner may be realized through WIFI, mobile cellular network, Near Field Communication (NFC) or other technologies. The computer program, when executed by the processor, implements the image processing method(s). The display unit of the electronic device is used to display a visually visible picture, which may be a display screen, a projection device, or a virtual reality imaging device. The display screen may be a liquid crystal display or an electronic ink display. The input means of the electronic device may be a touch layer covered on the display screen, or buttons, a trackball, or a touchpad arranged on the housing of the electronic device, or an external keyboard, touchpad, or mouse, etc.

Those skilled in the art may understand that the structure illustrated in FIG. 9 is only a part of the structure related to the solution of the present disclosure, and does not constitute a limitation on the electronic device to which the solution of the present disclosure is applied. A specific electronic device may include more or fewer components than those illustrated in the drawing, or combine some components, or have a different arrangement of components.

In an embodiment, an electronic device is further provided, which includes a memory and a processor. The memory stores therein a computer program which, when being executed by the processor, causes the operations in the above method embodiments to be implemented.

In an embodiment, a computer-readable storage medium is provided. The computer-readable storage medium stores thereon a computer program which, when being executed by a processor, causes the operations in the above method embodiments to be implemented.

In an embodiment, a computer program product is provided. The computer program product includes a computer program which, when being executed by a processor, causes the operations in the above method embodiments to be implemented.

It is notable that the user information (including but not limited to user equipment information, user personal information, etc.) and data (including but not limited to data used for analysis, stored data, displayed data, etc.) involved in the present disclosure are all information and data authorized by the user or fully authorized by all parties, and the collection, use, and processing of relevant data comply with relevant regulations.

Those ordinary skilled in the art may understand that all or part of the processes in the methods of the above embodiments may be implemented by instructing relevant hardware through a computer program. The computer program may be stored in a non-volatile computer-readable storage medium. When the computer program is executed, the processes of the above method embodiments are implemented. Any referenced memory, database, or other media in the embodiments provided in the present disclosure may include at least one of a non-volatile memory and a volatile memory. The non-volatile memory may include Read-Only Memory (ROM), magnetic tape, floppy disk, flash memory, optical memory, high-density embedded non-volatile memory, Resistive Random Access Memory (ReRAM), Magnetoresistive Random Access Memory (MRAM), Ferroelectric Random Access Memory (FRAM), Phase Change Memory (PCM), graphene memory, etc. The volatile memory may include Random Access Memory (RAM) or external cache memory, etc. By way of illustration and not limitation, RAM may be in various forms, such as Static Random Access Memory (SRAM) or Dynamic Random Access Memory (DRAM). The databases involved in the embodiments provided in the present disclosure may include at least one of relational databases and non-relational databases. The non-relational databases may include distributed databases based on blockchains, but are not limited thereto. The processor involved in the embodiments provided in present disclosure may be general-purpose processors, central processing units, graphics processors, digital signal processors, programmable logic devices, data processing logic devices based on quantum computing, artificial intelligence (AI) processors, etc., but are not limited thereto.

The technical features of the above embodiments may be combined arbitrarily. To make the description concise, not all possible combinations of the technical features in the above embodiments are described. However, as long as there is no contradiction in the combination of these technical features, they should be regarded as falling within the scope of the present disclosure.

The above embodiments only express several implementations of the present disclosure, and their descriptions are relatively specific and detailed, but they should not be construed as limiting the scope of the present disclosure. It should be noted that, several modifications and improvements can also be made by those ordinary skilled in the art without departing from the concept of the present disclosure, and all of them fall within the scope of protection of the present disclosure. Therefore, the scope of protection of the present disclosure should be subject to the appended claims.

**Claims**

1.   An image processing method, comprising:

acquiring (202) first spectral image data and second spectral image data, brightness values of the first spectral image data being different from brightness values of the second spectral image data;
obtaining (204) regional fusion data, by performing image fusion on a region of the first spectral image data and a corresponding region in the second spectral image data; and
obtaining (206) target spectral data by performing statistics on the regional fusion data.

2.   The method of claim 1, wherein the obtaining (204) regional fusion data by performing image fusion on a region of the first spectral image data and a corresponding region in the second spectral image data, comprises:
obtaining fusion data of a j-th spectral channel in an i-th region, by performing fusion processing based on a brightness value of the j-th spectral channel in the i-th region of the first spectral image data and a corresponding brightness fusion weight, and based on a brightness value of the j-th spectral channel in the i-th region of the second spectral image data and a corresponding brightness fusion weight, wherein i is a positive integer and j is a positive integer.

3.   The method of claim 2, wherein the brightness value of each spectral channel in each of the first spectral image data and the second spectral image data comprises one of a first brightness value and a second brightness value, the first brightness value and the second brightness value are in different brightness intervals; the first brightness value is less than the second brightness value; the first brightness value is positively correlated with the brightness fusion weight; and the second brightness value is negatively correlated with the brightness fusion weight.

4.   The method of claim 3, wherein when the first brightness value is less than a first threshold, the corresponding brightness fusion weight is a minimum preset value; when the first brightness value is greater than a second threshold and less than a third threshold, the corresponding brightness fusion weight is a maximum preset value; when the second brightness value is greater than a fourth threshold, the corresponding brightness fusion weight is the minimum preset value; the first threshold, the second threshold, the third threshold, and the fourth threshold are in ascending order, and the minimum preset value is less than the maximum preset value.

5.   The method of claim 3, wherein the obtaining fusion data of a j-th spectral channel in an i-th region, by performing fusion processing based on a brightness value of the j-th spectral channel in the i-th region of the first spectral image data and a corresponding brightness fusion weight, and based on a brightness value of the j-th spectral channel in the i-th region of the second spectral image data and a corresponding brightness fusion weight, comprises:

obtaining the fusion data of the j-th spectral channel in the i-th region, by performing fusion processing based on the brightness value of the j-th spectral channel in the i-th region of the first spectral image data, the corresponding brightness fusion weight and a corresponding gain coefficient fusion weight, and based on the brightness value of the j-th spectral channel in the i-th region of the second spectral image data, the corresponding brightness fusion weight and a corresponding gain coefficient fusion weight.
wherein each of the gain coefficient fusion weights is negatively correlated with a gain coefficient of the respective brightness value.

6. The method of claim 5, wherein the obtaining the fusion data of the j-th spectral channel in the i-th region, by performing fusion processing based on the brightness value of the j-th spectral channel in the i-th region of the first spectral image data, the corresponding brightness fusion weight and a corresponding gain coefficient fusion weight, and based on the brightness value of the j-th spectral channel in the i-th region of the second spectral image data, the corresponding brightness fusion weight and a corresponding gain coefficient fusion weight, comprises:

mapping the brightness value of the j-th spectral channel in the i-th region of the first spectral image data to a first brightness fusion weight, and determining a first gain coefficient fusion weight according to a gain coefficient of the first spectral image data;

adjusting the brightness value of the j-th spectral channel in the i-th region of the first spectral image data, according to the first brightness fusion weight and the first gain coefficient fusion weight, thereby obtaining a first weighted brightness value of the j-th spectral channel in the i-th region;

mapping the brightness value of the j-th spectral channel in the i-th region of the second spectral image data to a second brightness fusion weight, and determining a second gain coefficient fusion weight according to a gain coefficient of the second spectral image data;

adjusting the brightness value of the j-th spectral channel in the i-th region of the second spectral image data, according to the second brightness fusion weight and the second gain coefficient fusion weight, thereby obtaining a second weighted brightness value of the j-th spectral channel in the i-th region; and

summing the first weighted brightness value and the second weighted brightness value, thereby obtaining the fusion data of the j-th spectral channel in the i-th region.

7. The method of any one of claims 1 to 6, wherein the obtaining (206) target spectral data by performing statistics on the regional fusion data, comprises:

performing statistics, according to spectral channels, on each regional fusion data, thereby obtaining channel values of individual types of spectral channels; and

obtaining the target spectral data, by converting the channel values of the individual types spectral channel into spectral data.

8. The method of any one of claims 1 to 7, wherein the acquiring (202) first spectral image data and second spectral image data comprises:

acquiring (701) initial spectral image data; and

in response to determining (702) that a brightness of the initial spectral image data meets an adjustment condition, acquiring (703, 704) the first spectral image data and the second spectral image data.

9. The method of claim 8, wherein the determining that a brightness of the initial spectral image data meets an adjustment condition, comprises:

counting, in the initial spectral image data, the number of spectral channels whose brightness values meet a brightness condition, thereby obtaining the number of spectral channels meeting the brightness condition; and

in response to the number of spectral channels meeting the brightness condition satisfying a preset quantity condition, determining that the brightness of the initial spectral image data meets the adjustment condition;

wherein the spectral channels whose brightness values meet the brightness condition comprise at least one of a first spectral channel and a second spectral channel; a brightness value of the first spectral channel is less than a first critical value, a brightness value of the second spectral channel is equal to a second critical value, and the second critical value is greater than the first critical value.

10. The method of any one of claims 1 to 9, further comprising:

determining target environment data based on the target spectral data; and

performing color temperature adjustment on the target spectral data, according to the target environment data.

11. The method of claim 10, wherein the determining target environment data based on the target spectral data, comprises:

determining a ratio of spectral channel values in the target spectral data;

in response to determining, based on the ratio of spectral channel values, that there is one shooting scene, using environment data of the one shooting scene as the target environment data; and

in response to determining, based on the ratio of spectral channel values, that there are at least two shooting scenes, determining the target environment data according to image detection data of the at least two shooting scenes.

12. The method of any one of claims 1 to 11, wherein the acquiring first spectral image data and second spectral image data, comprises:

obtaining the first spectral image data under exposure with a first exposure time; and
obtaining the second spectral image data under exposure with a second exposure time,
the first exposure time being different from the second exposure time.

13. The method of any one of claims 1 to 12, further comprising:
determining a photographing parameter based on the target spectral data.

14. An electronic device, comprising a memory and a processor, wherein the memory stores a computer program which, when being executed by the processor, causes operations of the method of any one of claims 1 to 13 to be implemented.

15. A computer-readable storage medium storing a computer program thereon, wherein the computer program, when being executed by a processor, causes operations of the method of any one of claims 1 to 13 to be implemented.

104

Server

Data storage
system

Communication
network

102

Electronic device

e.g.

FIG. 1

202

Acquire first spectral image data and second spectral image data,
brightness values of the first spectral image data being different
from brightness values of the second spectral image data

204

Perform image fusion on a region of the first spectral image data
and a corresponding region in the second spectral image data,
thereby obtaining regional fusion data

206

Perform statistics on the regional fusion data, thereby obtaining
target spectral data

FIG. 2

FIG. 3

FIG. 4

FIG. 5

First spectral
image data
obtained through
long exposure

Second spectral
image data
obtained through
short exposure

FIG. 6

Collect initial
spectral image data  — 701

↓

Determine that
brightness of initial spectral image data
meets adjustment
condition  — 702

Collect first
spectral image
data  — 703

Collect second
spectral image
data  — 704

Obtain regional fusion data by fusing the
first spectral image data and the second
spectral image data  — 705

↓

Perform statistics on spectral information of
the regional fusion data  — 706

↓

Restore spectral information to target
spectral image data  — 707

↓

Perform color temperature adaptation on the
target spectral image data  — 708

FIG. 7

~802

Acquisition module

~804

Fusion module

~806

Restoration module

FIG. 8

Memory

Operating system

Computer program

Non-volatile storage medium

Processor

Internal memory

System bus

Input/output interface

Input means

Communication interface

Display unit

Electronic device

FIG. 9

EUROPEAN SEARCH REPORT

**Application Number**

EP 25 22 4271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BRAUERS JOHANNES ET AL: "Multispectral high dynamic range imaging", COLOR IMAGING XIII: PROCESSING, HARDCOPY, AND APPLICATIONS, vol. 6807, 27 January 2008 (2008-01-27), pages 680704-680704, XP093361097, DOI: 10.1117/12.761105 | 1,7,12, 14,15 | INV. G06T5/50 |
| A | * abstract; figures 1-7 * <br> * sections 1-3 * | 2-6, 8-11,13 | |
| Y | GOSHTASBY ET AL: "Fusion of multi-exposure images", IMAGE AND VISION COMPUTING, ELSEVIER, GUILDFORD, GB, vol. 23, no. 6, 1 June 2005 (2005-06-01), pages 611-618, XP027617890, ISSN: 0262-8856 [retrieved on 2005-06-01] | 1,7,12, 14,15 | |
| A | * abstract; figure 1 * <br> * section 2 * | 2-6, 8-11,13 | |

TECHNICAL FIELDS SEARCHED (IPC)

G06T

The present search report has been drawn up for all claims

| Place of search | Date of completion of the search | Examiner |
|---|---|---|
| Munich | 17 March 2026 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)